# FASCICULE DE BREVET EUROPEEN

(11) **EP 3 317 732 B1**
(45) Date de publication et mention de la délivrance du brevet: **02.10.2024**
(21) Numéro de dépôt: 16750906.6
(22) Date de dépôt: 30.06.2016
(51) Int. Cl.: G05B 15/02, H04L 12/28

(54) **PROCÉDÉ D'ENREGISTREMENT D'UNE UNITÉ CENTRALE DE COMMANDE APPARTENANT À UNE INSTALLATION DOMOTIQUE**
VERFAHREN ZUR ANMELDUNG EINER ZENTRALEN STEUEREINHEIT EINER HEIMAUTOMATISIERUNGSANLAGE
METHOD FOR REGISTERING A CENTRAL CONTROL UNIT BELONGING TO A HOME-AUTOMATION FACILITY

(30) Priorité: 03.07.2015 FR 1556293
(43) Date de publication de la demande: 09.05.2018
(73) Titulaire: SOMFY ACTIVITES SA, 74300 Cluses (FR)
(72) Inventeur: POGNANT, Sylvain, 74600 Seynod (FR)
(74) Mandataire: Germain Maureau
(86) Numéro de dépôt international: PCT/FR2016/051636
(87) Numéro de publication internationale: WO 2017/006023

(56) Documents cités:
- BERNIER FRANCK ET AL: "Architecture for self-organizing, co-operative and robust Building Automation Systems", IECON 2013 - 39TH ANNUAL CONFERENCE OF THE IEEE INDUSTRIAL ELECTRONICS SOCIETY, IEEE, 10 November 2013 (2013-11-10), pages 7708 - 7713, XP032538653, ISSN: 1553-572X, [retrieved on 20131230], DOI: 10.1109/IECON.2013.6700418
- JI EUN KIM ET AL: "Seamless Integration of Heterogeneous Devices and Access Control in Smart Homes", INTELLIGENT ENVIRONMENTS (IE), 2012 8TH INTERNATIONAL CONFERENCE ON, IEEE, 26 June 2012 (2012-06-26), pages 206 - 213, XP032218223, ISBN: 978-1-4673-2093-1, DOI: 10.1109/IE.2012.57
- MARC-OLIVER PAHL ET AL: "Knowledge-based middleware for future home networks", WIRELESS DAYS (WD), 2009 2ND IFIP, IEEE, PISCATAWAY, NJ, USA, 15 December 2009 (2009-12-15), pages 1 - 6, XP031659489, ISBN: 978-1-4244-5660-4

## Description

La présente invention concerne un procédé de configuration, de commande et/ou de supervision d'une installation domotique.

Une installation domotique d'un bâtiment peut comprendre une pluralité de dispositifs domotiques. Il est connu de procéder à la configuration, à la commande et/ou à la supervision de ladite installation en utilisant une unité centrale de commande qui communique avec un ou plusieurs dispositifs domotiques.

Dans le cas de bâtiments de grande taille, il peut être nécessaire soit de recourir à des répéteurs, soit de procéder à l'installation de plusieurs unités centrales afin de permettre d'accéder à l'ensemble des dispositifs domotiques faisant partie de l'installation. Par ailleurs, dans le cas d'installations domotiques hétéroclites, dans lesquels de nombreux types de dispositifs domotiques doivent être contrôlés, il peut également être souhaitable d'utiliser plusieurs unités centrales de commandes qui permettent de communiquer dans les différents protocoles de communication utilisés par les dispositifs domotiques.

Si la présence de ces différentes unités permet de communiquer avec l'ensemble des dispositifs, l'architecture ainsi constituée est complexe à maîtriser pour un utilisateur.

La présente invention a pour but de résoudre tout ou partie des inconvénients mentionnés ci-dessus.

A cet effet, la présente invention concerne un procédé d'enregistrement selon la revendication 1.

Grâce aux dispositions selon l'invention, il est possible d'utiliser plusieurs unités centrales de commandes au sein d'une même installation afin d'étendre le nombre de types de dispositifs domotiques ou le nombre de protocoles domotiques utilisables dans une même installation, ou d'augmenter le nombre de dispositifs total de l'installation, tout en conservant une identification de l'appartenance des différents dispositifs domotiques à une même installation.

Ainsi, l'interface présentée à l'utilisateur peut ainsi ajouter une couche d'abstraction pour cacher le rattachement effectif des dispositifs aux unités centrales de commande. L'interface représente ainsi les équipements domotiques, comme les volets, stores, systèmes HVAC ou d'éclairage, pilotables dans l'installation ainsi que les capteurs présents.

Ces dispositions sont obtenues sans communication entre les unités centrales de commande, mais simplement par le rattachement logique opéré lors de l'enregistrement.

Il est à noter que l'on entend par dispositif domotique un équipement domotique et/ou un capteur, ou encore une partie d'équipement domotique ou une partie de capteur correspondant à un sous-ensemble fonctionnel.

Par ailleurs, on entend par message un élément d'information notifié ou réceptionné sous la forme d'un appel synchrone ou asynchrone, pouvant également correspondre à un appel de fonction local ou distant.

Par installation, on entend un ensemble comprenant une pluralité de dispositifs domotiques et une pluralité d'unités de commande disposés dans un seul bâtiment ou sur une pluralités de lieux, chaque dispositif domotique étant relié à une unité électronique de commande parmi la pluralité d'unités électroniques de commande, la pluralité d'unités électroniques de commande formant un groupe sous le contrôle d'un utilisateur. Les dispositifs électroniques forment des groupes d'au moins un dispositif domotique rattaché à une unité électronique de commande.

Un même dispositif ou une même unité de commande peut appartenir à deux installations différentes sous la responsabilité de deux utilisateurs différents. A titre d'exemple, un dispositif domotique correspondant à un système de chauffage peut être compris dans une première installation domotique comprenant un ensemble des dispositifs compris dans un logement, sous le contrôle d'un utilisateur occupant le logement, et dans une seconde installation domotique comprenant un ensemble de dispositifs domotiques correspondant à des systèmes de chauffage disposés dans une pluralité de logement sous le contrôle d'un utilisateur administrateur des équipements de chauffage pour la pluralité de logements.

Par unité centrale de commande de l'installation domotique, on entend une unité électronique comprenant au moins une unité de traitement pour contenir et exécuter au moins un programme d'ordinateur, comprenant au moins un module de communication destiné au contrôle et/ou à la commande d'au moins un dispositif domotique et au moins un module de communication avec l'unité de gestion. L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques. Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

Lors de la première étape de réception d'un premier message de demande d'enregistrement, la première information d'identification peut être contenue dans le message ou être définie en lien avec le message, par exemple par des informations relatives à l'adresse réseau d'expédition du message. Il est en de même pour la seconde étape de réception.

Selon un aspect de l'invention, l'unité de gestion est un serveur connecté à distance à l'au moins une installation domotique, par l'intermédiaire d'un réseau étendu.

Selon un autre aspect de l'invention, l'unité de gestion est une unité centrale destinée à être reliée à une ou plusieurs unités centrales de commande sur des réseaux privés ou locaux distincts, ou encore sur le même réseau local.

Selon un aspect de l'invention, dans le cas de l'appairage d'un nouveau dispositif à une unité centrale de commande, ou au contraire de la suppression d'un dispositif, ou encore de sa modification, un message de mise à jour est envoyé à l'unité de gestion afin de mettre également à jour le groupe de dispositif dépendant de l'entité représentative.

Selon l'invention, l'entité représentative de l'installation domotique est associée à un groupe de dispositifs regroupant les dispositifs contenus dans au moins un premier groupe de dispositifs attaché à la première unité centrale de commande et au moins un deuxième groupe de dispositifs attaché à la deuxième unité centrale de commande.

Ainsi, les unités centrales de commande sont considérées comme rattachées à la même entité représentative d'une installation, qui rassemble l'ensemble des dispositifs de l'installation rattachés indifféremment à la première ou à la seconde unité centrale de commande dans un même groupe qui peut être communiqué à un utilisateur ou à une application tierce.

Selon un aspect de l'invention, l'entité représentative de l'installation domotique est associée à un groupe comprenant au moins les identifiants de la première unité centrale de commande et de la deuxième unité centrale de commande.

Selon un aspect de l'invention, l'entité représentative de l'installation domotique est associée à un groupe comprenant au moins un identifiant d'un utilisateur.

Selon un aspect de l'invention, le procédé d'enregistrement comprend en outre l'étape suivante :
- stockage d'une information de rattachement d'au moins un dispositif domotiques à une unité centrale de commande U ;

Le stockage de cette information est prévu en vue du routage des messages vers l'unité centrale de commande concernée dans le cas de commande par l'unité de gestion.

Selon un aspect de l'invention, les dispositifs domotiques sont identifiés de façon unique par un identifiant de dispositif comprenant un identifiant de l'unité centrale de commande à laquelle se rattache ledit dispositif.

Selon l'invention, la première et/ou la deuxième information de rattachement comprennent un identifiant d'une unité centrale de commande appartenant déjà à une entité représentative. Selon un aspect de l'invention, la première et/ou la deuxième information de rattachement comprennent un identifiant d'un utilisateur et/ou un identifiant d'une entité représentative d'une installation.

Grâce à ces dispositions, il est possible de spécifier que la première unité centrale de commande et la deuxième unité centrale de commande font partie de la même installation.

Etant donné que l'identifiant de l'unité centrale de commande est habituellement un numéro de série qui est visible et/ou accessible à l'utilisateur et a déjà été utilisé pendant le processus d'enregistrement de l'unité centrale de commande, son usage peut être préféré à l'introduction d'un nouvel identifiant unique pour l'installation ou l'entité représentative correspondante. Etant donné que l'installation comprend toujours au moins une unité centrale de commande rattachée, elle peut toujours être désignée de cette façon. De façon interne au serveur, un identifiant unique de l'entité représentative de l'installation peut exister pour faciliter l'implémentation.

Selon un aspect de l'invention, le procédé d'enregistrement comprend en outre, dans le cas où une unité centrale de commande est déjà appairée avec un ou plusieurs dispositifs d'un groupe, l'étape suivante :
- Mise à jour de l'entité représentative pour intégrer lesdits dispositifs dans le groupe de dispositifs attaché à l'entité représentative de l'installation.

Selon un aspect de l'invention, les informations nécessaires à la mise à jour de l'entité représentative peuvent être présentes dans le message, ou faire l'objet d'échanges supplémentaires entre le serveur et ladite unité centrale de commande afin d'obtenir des éléments d'identification des dispositifs concernés.

La présente invention concerne également un produit programme d'ordinateur comprenant des instructions de code agencées pour mettre en oeuvre les étapes d'un procédé d'enregistrement tel que décrit précédemment, lorsque ledit programme est exécuté par un processeur d'une unité de gestion.

La présente invention concerne également un système comprenant une unité de gestion agencée pour exécuter le procédé d'enregistrement tel que décrit précédemment, de façon connectée à au moins une unité centrale de commande d'une installation domotique.

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1 ainsi qu'un serveur destiné à être connecté à un terminal utilisateur ;
La figure 3 est un schéma représentant les relations entre une entité représentative d'une installation domotique, les unités centrales de commande et les dispositifs de l'installation domotique.
La figure 4 est un schéma illustrant un mode de mise en oeuvre d'un procédé d'enregistrement d'une unité centrale de commande d'une installation domotique auprès d'une unité de gestion selon l'invention.

Dans la description détaillée qui va suivre des figures définies ci-dessus, les mêmes éléments ou les éléments remplissant des fonctions identiques pourront conserver les mêmes références de manière à simplifier la compréhension de l'invention.

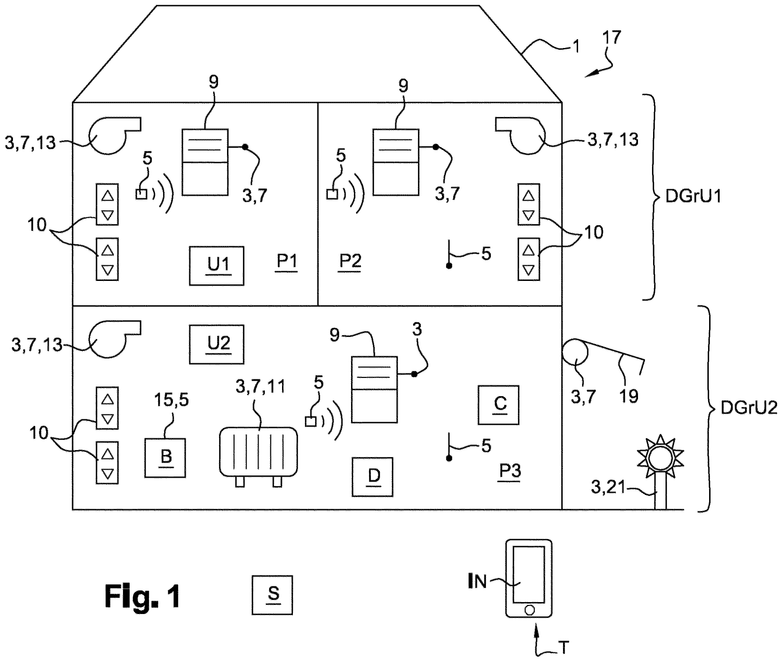

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique 17 peut également comprendre un point de commande 15 d'un actionneur 7, comme un boîtier de commande B sans fil pour le volet roulant 9.

L'installation domotique 17 peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique 17.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

L'installation domotique 17 comprend une pluralité d'unités centrales de commande U1, U2. En particulier et à titre d'exemple, deux unités centrales de commande U1, U2 sont représentées sur la figure 1.

Chaque unité centrale de commande U1, U2 est agencée pour commander et/ou contrôler une partie des dispositifs D de l'installation 17 formant un groupe DGrU1, DGrU2. A titre d'exemple, sur la figure 1, l'unité centrale de commande U1 est en charge des dispositifs D disposés dans les pièces P1 et P2 du premier étage du bâtiment, alors que l'unité centrale de commande U2 est en charge des dispositifs D disposés dans la pièce P3 au rez-de-chaussée du bâtiment et des dispositifs extérieurs.

En particulier la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

Les dispositifs D faisant partie d'un groupe DGrU1, DGrU2 appartiennent à un réseau local géré par une unité centrale de commande U1 ou U2 au sein de l'installation domotique et communiquent selon un protocole de communication local avec l'unité centrale de commande U1 ou U2. Ils ont une adresse locale dans ce réseau. Les dispositifs logiques D peuvent être modélisés comme des noeuds ou points d'extrémité dans le réseau local.

Le système d'adressage local peut être hiérarchique ou à plat, le format d'adresse pouvant être numérique ou alphanumérique.

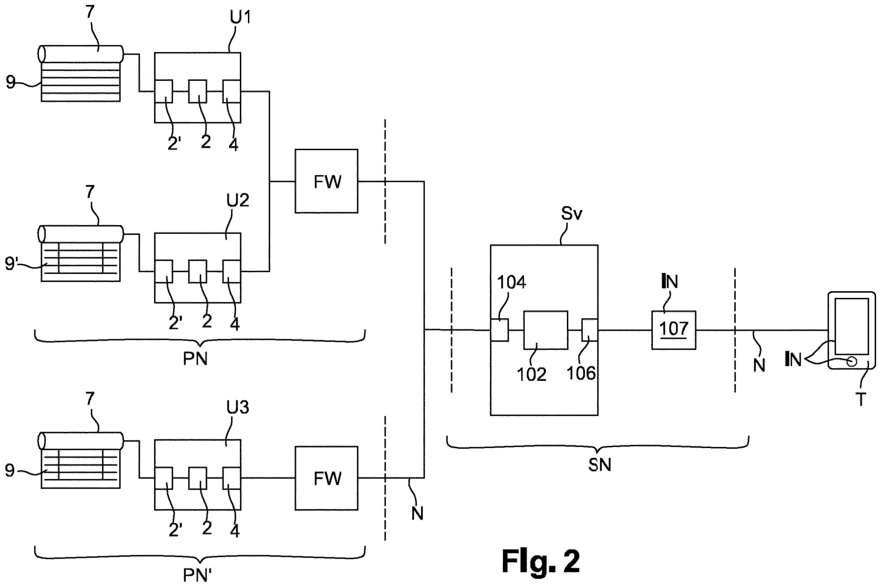

Comme cela est représenté sur la figure 2, chaque unité centrale de commande U est agencée pour communiquer avec un serveur Sv.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes U1, U2 sont disposées sur un premier réseau privé correspondant à une première installation domotique, alors qu'une troisième unité centrale de commande U3 est disposée sur un second réseau privé PN', indépendant du réseau privé PN correspondant à une seconde installation domotique. Le serveur Sv est également disposé sur un réseau privé SN. Le réseau privé PN est relié à un réseau étendu N, par exemple Internet. Bien entendu, le serveur Sv est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'un mémoire vive, et d'une puce Ethernet.

L'unité centrale de commande U comprend, en outre, au moins un module de communication 2' destinée au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1.

A titre d'exemple, le module de communication 2' peut être agencé pour mettre en oeuvre par exemple un ou plusieurs des protocoles Z-Wave, EnOcean, IO Homecontrol, Somfy RTS, KNX, MODBUS, Wavenis, Philips HUE.

Selon une autre possibilité, par exemple dans le cadre de systèmes d'alarme, l'unité centrale de commande peut être intégrée dans le dispositif domotique.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U comprend, en outre, un module de communication 4 avec le serveur Sv. Le serveur Sv permet la commande et/ou le contrôle à distance et comprend une ou plusieurs unités de traitement 102 agencée pour contenir et exécuter un deuxième programme d'ordinateur.

Dans certaines applications, une unité centrale de commande U peut communiquer avec l'unité de gestion à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

Les figures 1 et 2 décrivent une installation 17 qui comprend un ensemble de dispositifs D et une pluralité d'unités centrales de commande U1, U2, disposées dans un même logement, un même bâtiment ou un même lieu physique.

Selon une autre possibilité, une installation 17 au sens de l'invention peut comprendre des dispositifs domotiques disposés sur une pluralité de lieux, avec au moins une unité centrale de commande sur chacun de ces lieux à laquelle sont rattachés les dispositifs domotiques, les unités centrales de commande U de l'installation étant placées sous le contrôle d'un utilisateur.

A titre d'exemple, une telle installation peut comprendre un ensemble de dispositifs domotiques constitués par des systèmes de chauffage répartis dans un ensemble de logements ou de locaux tertiaires, rattaché à un ensemble d'unité centrales de commande U, l'ensemble de dispositifs domotiques étant destiné à être commandé par un utilisateur spécifiques en charge du chauffage pour ledit ensemble de logements ou de locaux tertiaires.

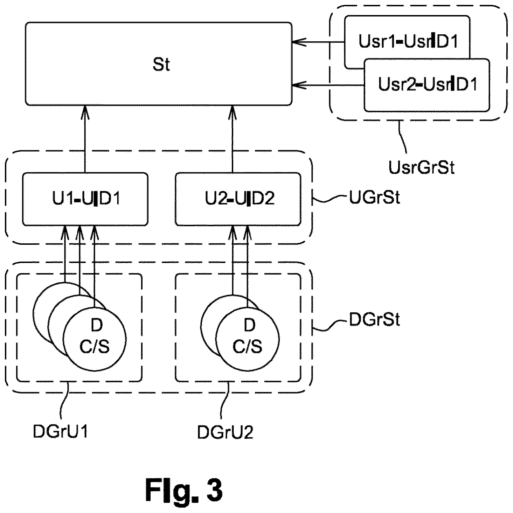

Nous allons à présent décrire, en référence à la figure 3, la représentation de l'installation 17 par une entité représentative St sur le serveur Sv, dans le cas où l'installation comprend de multiples unités centrales de commandes U.

Le système selon l'invention rattache plusieurs unités centrales de commande U à un seul objet St représentant une installation 17 par une configuration au niveau du serveur Sv.

Le serveur Sv peut ainsi présenter à l'utilisateur l'installation 17 comme un seul ensemble de dispositifs D à l'utilisateur, par exemple par l'intermédiaire d'une Interface de Programmation d'Application ou API, dans lequel chaque dispositif D peut accepter un ensemble donné de commandes C ou présenter des variables d'état S.

Le serveur Sv peut également utiliser un système ou couche d'abstraction pour les commandes C et les variables d'état S pour proposer une API plus générique et indépendante du protocole de communication utilisée par un dispositif D donné.

L'identification de l'entité représentative St de l'installation peut être selon un mode de réalisation réalisée par l'un quelconque des identifiants UID de l'une des unités centrales de commande U présente dans l'installation.

Ainsi, pour simplifier la désignation d'une installation dans les APIs publiques, il suffit que les utilisateurs de ces APIs fournissent un identifiant unique d'une quelconque des unités centrale de commande U attachée à l'entité représentative St de l'installation 17.

Etant donné que l'identifiant de l'unité centrale de commande UID est habituellement un numéro de série qui est visible et/ou accessible à l'utilisateur et a déjà été utilisé pendant le processus d'enregistrement de l'unité centrale de commande U, son usage peut être préféré à l'introduction d'un nouvel identifiant unique pour l'installation ou l'entité représentative correspondante. Etant donné que l'installation comprend toujours au moins une unité centrale de commande rattachée, elle peut toujours être désignée de cette façon. De façon interne au serveur, un identifiant unique de l'entité représentative de l'installation peut exister pour faciliter l'implémentation.

Ainsi, l'entité représentative St peut être associée à une liste ou groupe de dispositifs DGrSt regroupant les dispositifs contenus dans les différents groupes DGrU1, DGrU2 attachés à chaque unité centrale de commande U1, U2, et à un groupe UGrSt des identifiants UID des unités centrales de commandes concernées U. Les dispositifs sont identifiés par un identifiant unique de dispositif DURL.

Une entité représentative d'une installation domotique peut être associée avec un utilisateur donné Usr1, identifié par un identifiant UsrID, correspondant par exemple à une combinaison login et mot de passe ou avec un groupe d'utilisateur donné UsrGrSt.

Un exemple de mode de réalisation d'un identifiant unique d'un dispositif DURL va être à présent décrite.

Selon ce mode de réalisation, l'identifiant unique d'un dispositif DURL comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemld si le dispositif comprend plusieurs sous-ensemble fonctionnels ou sous-systèmes qui peuvent être adressés séparément. Les dispositifs qui ne comprennent qu'un ensemble fonctionnel ne présentent pas d'extension d'identification d'un sous-système.

Ainsi, la forme de l'identifiant unique d'un dispositif DURL peut être la suivante :
<protocol>://<gatewayId>/<rawDeviceAddress>(#<subsystemId>)

Dans laquelle les champs suivants sont présents :
protocol : identifiant du protocole local de dispositif natif;
gatewayld : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemld : ce champ optionnel indique une identification, par exemple un rang du sous-système (démarrant par exemple à 1), si un tel sous-système est présent.

### Exemples:

### 1) knx://0201-0001-1234/1.1.3

Cet identifiant unique de dispositif DURL correspond à un dispositif D communiquant par le protocole KNX avec une adresse individuelle 1.1.3 accessible par l'unité centrale de commande U portant l'identifiant #0201-0001-1234.

### 2) io://0201-0001-1234/145036#2

Cet identifiant unique d'un dispositif DURL correspond à un sous-système portant le n°2 associé à un dispositif D communiquant par le protocole io homecontrol avec une adresse radio 145036 accessible par l'unité centrale de commande U portant l'identifiant #0201-0001-1234.

Les manipulations des données relatives aux dispositifs D au niveau du serveur Sv sont réalisées par un processus ou service d'exécution ES. Afin de stocker les données relatives aux différentes instances de dispositif D mentionnées ci-dessus, le service d'exécution peut avoir accès à une base de données d'instances IDB. Bien entendu, ces différents types d'instances peuvent être stockés également de façon séparée. Par ailleurs, par base de données, on entend ici un mode de stockage approprié pour un ensemble d'instances, qui peuvent être mémorisées dans une liste, un arbre ou des tables ou tout autre structure de données appropriée.

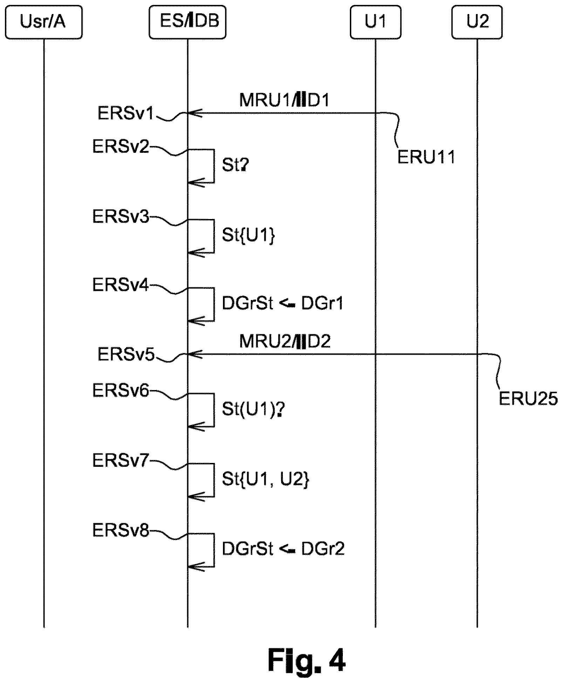

Nous allons à présent décrire un procédé d'enregistrement des unités centrales de commande U, en référence à la figure 4, auprès d'un serveur Sv connecté à l'au moins une installation domotique 17.

Dans une première étape ERSv1, le serveur Sv reçoit un message MRU1 de demande d'enregistrement d'une première unité centrale de commande U1 pour l'installation 17, émise dans une étape ERU1 par une première unité centrale de commande U1, ou alternativement par un terminal utilisateur T, sur la base d'une information d'identification IID1.

L'information d'identification peut correspondre par exemple à un identifiant d'une unité centrale de commande appartenant déjà à une entité représentative, et/ou à un identifiant de l'utilisateur UsrID sous la responsabilité duquel l'enregistrement est effectué et/ou directement à un identifiant d'une entité représentative d'une installation. L'information d'identification peut être contenue dans le message ou être déduite du contexte, par exemple d'une adresse réseau d'émission du message, ou encore de caractéristiques relatives à la session de communication.

Dans une seconde étape ERSv2, le serveur obtient une information de rattachement Stl1 de la première unité centrale de commande U1 à une entité représentative St d'une installation domotique 17. Si l'information de rattachement correspond à une absence d'information concernant un rattachement de l'unité centrale de commande U1 à une installation 17 précédemment enregistrée, le serveur procède dans une troisième étape ERSv3 à la création d'une entité représentative de l'installation 17 et rattache la première unité centrale de commande U1 à cette entité représentative St. Cela est notamment le cas lors de l'enregistrement d'une première unité centrale de commande U1 d'une installation donnée.

Dans le cas où une unité centrale de commande U est déjà appairée avec un ou plusieurs dispositifs D d'un groupe DGrU1, l'entité représentative St est mise à jour dans une quatrième étape ERSv4 pour représenter ces dispositifs dans le groupe de dispositifs DGrSt attaché à l'entité représentative de l'installation 17. Ainsi, le groupe de dispositifs DGrSt est mis à jour. Les informations nécessaires à la mise à jour de l'entité représentative St peuvent être présentes dans le message MRU2, ou faire l'objet d'échanges supplémentaires entre le serveur Sv afin d'obtenir des éléments d'identification des dispositifs D concernés.

Dans une cinquième étape ultérieure ERSvS, le serveur Sv reçoit un message MRU2 de demande d'enregistrement d'une deuxième unité centrale de commande U2 pour l'installation 17, émis dans une étape ERU1 par une deuxième unité centrale de commande U2, ou alternativement par un terminal utilisateur T, sur la base d'une information d'identification IID2.

Comme nous l'avons vu précédemment, l'information d'identification peut correspondre par exemple à un identifiant d'une unité centrale de commande appartenant déjà à une entité représentative, et/ou à un identifiant de l'utilisateur UsrID sous la responsabilité duquel l'enregistrement est effectué.

Dans une sixième étape ERSv6, le serveur Sv procède à l'obtention d'information de rattachement Stl2 de la deuxième unité centrale de commande U2 à une entité représentative St d'une installation domotique 17. Dans le cas présent, le message MRU2 comprend, à titre d'information d'identification, un identifiant UID1 de la première unité centrale de commande U1 afin de spécifier que les deux unités centrales de commande U1 et U2 font partie de la même installation, cette information étant éventuellement combinée avec un identifiant d'utilisateur UID1.

Dans une septième étape ERSv7, le serveur Sv procède à un rattachement de la seconde unité centrale à une entité représentative St de l'installation 17 à laquelle est également rattachée la première unité centrale de commande U1 pour le même utilisateur UID1.

Dans le cas où l'unité centrale de commande U2 est déjà appairée avec un ou plusieurs dispositifs D d'un groupe DGrU2, l'entité représentative St est mise à jour dans une huitième étape ERSv8 pour représenter ces dispositifs dans le groupe de dispositifs DGrSt attaché à l'entité représentative de l'installation 17. Ainsi, le groupe de dispositifs DGrSt est mis à jour. Les informations nécessaires à la mise à jour de l'entité représentative peuvent être présentes dans le message MRU2, ou faire l'objet d'échanges supplémentaires entre le serveur Sv afin d'obtenir des éléments d'identification des dispositifs D concernés.

Ainsi, les unités centrales de commande U1 et U2 sont considérées comme rattachées à la même entité représentative St d'une installation, qui rassemble l'ensemble des dispositifs D de l'installation rattachés indifféremment à la première ou à la seconde unité centrale de commande dans un même groupe DGrSt qui peut être communiqué à un terminal utilisateur T. Ces dispositions sont obtenues sans communication entre les unités centrales de commande, mais simplement par le rattachement logique opéré lors de l'enregistrement.

L'interface présentée à l'utilisateur peut ainsi ajouter une couche d'abstraction pour cacher le rattachement effectif des dispositifs aux unités centrales de commande U. L'interface représente ainsi les équipements domotiques, comme les volets, stores, HVAC ou éclairage, pilotables dans l'installation ainsi que les capteurs présents.

Si les dispositifs D sont ainsi rattachés à une entité représentative de l'installation, les informations de rattachement des dispositifs domotiques D aux unités centrales de commande U sont toutefois transmises au serveur Sv, pour intégration dans la structure de données, en vue du routage des messages vers l'unité centrale de commande concernée dans le cas de commande par le Serveur Sv. En particulier, l'identifiant de l'unité centrale de commande à laquelle se rattache un produit peut être contenue dans l'identifiant DURL.

Une unité centrale de commande U peut être détachée de l'entité représentative St d'une installation. Lorsqu'une unité centrale de commande U est détachée, tous les dispositifs qui sont gérés par l'intermédiaire de l'unité centrale de commande sont supprimés du groupe DGrSt de dispositifs de l'entité représentative St de l'installation 17. Ainsi, il est possible de prévoir qu'une unité centrale ne peut pas être détachée si l'entité représentative St comprend des dépendances sur les dispositifs D gérés par cette unité centrale de commande U, comme des scénarios. Ces dépendances doivent être supprimées avant que l'unité centrale de commande U puisse être détachée.

Dans le cas de l'appairage d'un nouveau dispositif D à une unité centrale de commande U, ou au contraire de la suppression d'un dispositif, ou encore de sa modification, un message de mise à jour est envoyé au Serveur Sv afin de mettre également à jour la liste de dispositif DGrSt dépendant de l'entité représentative St.

Grâce à ce procédé d'enregistrement, le serveur Sv peut donc proposer sur l'interface IN une description de l'installation 17, grâce à l'utilisation de l'entité représentative sous forme d'un groupe de dispositifs D, contenu dans le groupe de dispositifs DGrSt, qui présentent des variables d'état S mais également des commandes disponibles C.

Il est ainsi possible de commander et de contrôler par l'interface l'ensemble des dispositifs de l'installation indépendamment de leur rattachement aux unités centrales U.

## Revendications

1. Procédé d'enregistrement d'une unité centrale de commande (U) appartenant à une installation domotique (17), l'installation domotique (17) comprenant une pluralité de dispositifs domotiques (D) et une pluralité d'unités centrales de commande (U1, U2), chaque unité centrale de commande (U1, U2) comprenant au moins une unité de traitement pour contenir et exécuter au moins un programme d'ordinateur, chaque unité centrale de commande (U1, U2) comprenant en outre au moins un module de communication destiné au contrôle et/ou à la commande d'au moins un dispositif domotique, chaque unité centrale de commande (U1, U2) comprenant en outre au moins un module de communication avec une unité de gestion (Sv); le procédé étant exécuté par l'unité de gestion (Sv) connectée à l'au moins une installation domotique (17) et comprenant les étapes suivantes :
i. Réception (ERSv1) d'un premier message de demande d'enregistrement (MRU1) d'une première unité centrale de commande (U1) pour l'installation (17) émise par une première unité centrale de commande (U1), ou alternativement par un terminal utilisateur (T), en lien avec une première information d'identification IID1.
ii. Obtention (ERSv2) d'une première information de rattachement (Stl1) de la première unité centrale de commande (U1) à une entité représentative (St) d'une installation domotique (17).
iii. Si la première information de rattachement (Stl1) correspond à une absence de rattachement de l'unité centrale de commande (U1) à une installation (17) précédemment enregistrée, création (ERSv3) d'une entité représentative (St) de l'installation (17) et rattachement de la première unité centrale de commande (U1) à ladite entité représentative (St).
iv. Réception (ERSv5) d'un deuxième message de demande d'enregistrement (MRU2) d'une seconde unité centrale de commande (U2) pour l'installation (17), émise par la deuxième unité centrale de commande (U2), ou alternativement par un terminal utilisateur (T), en lien avec une deuxième information d'identification (IID2).
v. Obtention (ERSv6) d'une seconde information de rattachement (Stl2) de la deuxième unité centrale de commande (U2) à une entité représentative (St) d'une installation domotique (17).
vi. Dans le cas où la seconde information de rattachement (Stl2) correspond à un rattachement à une entité représentative d'une installation comprenant la première unité centrale de commande (U1), rattachement (ERSv7) de la seconde unité centrale (U2) à une entité représentative (St) de l'installation (17) à laquelle est également rattachée la première unité centrale de commande (U1),
dans lequel l'entité représentative (St) de l'installation domotique (17) est associée à un groupe (DGrSt) de dispositifs regroupant les dispositifs contenus dans au moins un premier groupe (DGrU1) de dispositifs attaché à la première unité centrale de commande (U1) et au moins un deuxième groupe (DGrU2) de dispositifs attaché à la deuxième unité centrale de commande (U2),
dans lequel la première et/ou la deuxième information de rattachement (IID1, IID2) comprennent un identifiant d'une unité centrale de commande appartenant déjà à une entité représentative (St).

2. Procédé d'enregistrement selon la revendication 1, dans lequel l'entité représentative (St) de l'installation domotique (17) est associée à un groupe (UGrSt) comprenant au moins les identifiants (UID1, UID2) de la première unité centrale de commande (U1) et de la deuxième unité centrale de commande (U2).

3. Procédé d'enregistrement selon l'une quelconque des revendications 1 à 2, dans lequel l'entité représentative (St) de l'installation domotique (17) est associée à un groupe (UsrGrSt) comprenant au moins un identifiant (UsrID1) d'un utilisateur.

4. Procédé d'enregistrement selon l'une quelconque des revendications 1 à 3, comprenant en outre l'étape suivante :
- stockage d'une information de rattachement d'au moins un dispositif domotiques (D) à une unité centrale de commande U ;

5. Procédé d'enregistrement selon l'une quelconque des revendications 1 à 4, dans lequel les dispositifs domotiques (D) sont identifiés de façon unique par un identifiant de dispositif (DURL) comprenant un identifiant de l'unité centrale de commande (UID) à laquelle se rattache ledit dispositif.

6. Procédé d'enregistrement selon l'une quelconque des revendications 1 à 5, dans lequel la première et/ou la deuxième information de rattachement (IID1, IID2) comprennent un identifiant d'un utilisateur (UsrID) et/ou un identifiant d'une entité représentative d'une installation (St).

7. Procédé d'enregistrement selon l'une quelconque des revendications 1 à 6, comprenant en outre, dans le cas où une unité centrale de commande (U) est déjà appairée avec un ou plusieurs dispositifs (D) d'un groupe (DGrU1), l'étape suivante :
- Mise à jour (ERSv4) de l'entité représentative (St) pour intégrer lesdits dispositifs (D) dans le groupe de dispositifs (DGrSt) attaché à l'entité représentative de l'installation (17).

8. Produit programme d'ordinateur comprenant des instructions de code agencées pour mettre en oeuvre les étapes d'un procédé selon l'une quelconque des revendications 1 à 7, lorsque ledit programme est exécuté par un processeur d'une unité de gestion (Sv).

9. Système comprenant une unité de gestion (Sv) agencée pour exécuter le procédé selon l'une des revendications 1 à 7, de façon connectée à au moins une unité centrale de commande (U) d'une installation domotique (17).

## Patentansprüche

1. Registrierungsverfahren einer zentralen Steuereinheit (U), die zu einer Gebäudeautomatisierungsanlage (17) gehört, wobei die Gebäudeautomatisierungsanlage (17) eine Vielzahl von Gebäudeautomatisierungsvorrichtungen (D) und eine Vielzahl von zentralen Steuereinheiten (U1, U2) umfasst, wobei jede zentrale Steuereinheit (U1, U2) mindestens eine Verarbeitungseinheit zum Aufrechterhalten und Ausführen mindestens eines Computerprogramms umfasst, wobei jede zentrale Steuereinheit (U1, U2) ferner mindestens ein Kommunikationsmodul umfasst, das zur Kontrolle und/oder zur Steuerung der mindestens einen Gebäudeautomatisierungsvorrichtung bestimmt ist, wobei jede zentrale Steuereinheit (U1, U2) ferner mindestens ein Kommunikationsmodul mit einer Verwaltungseinheit (Sv) umfasst; wobei das Verfahren von der Verwaltungseinheit (Sv) ausgeführt wird, die mit mindestens einer Gebäudeautomatisierungsanlage (17) verbunden ist, und die folgenden Schritte umfassend:
i. Empfangen (ERSv1) einer ersten Nachricht zur Registrierungsanforderung (MRU1) einer ersten zentralen Steuereinheit (U1) für die Anlage (17), die von einer ersten zentralen Steuereinheit (U1) oder alternativ von einem Benutzerterminal (T) emittiert wurde, in Verbindung mit einer ersten Identifikationsinformation (IID1).
ii. Erhalten (ERSv2) einer ersten Information des Anschlusses (Stl1) der ersten zentralen Steuereinheit (U1) an eine repräsentative Entität (St) einer Gebäudeautomatisierungsanlage (17).
iii. Wenn die erste Anschlussinformation (Stl1) einem fehlenden Anschluss der zentralen Steuereinheit (U1) an eine zuvor registrierte Anlage (17) entspricht, Erstellen (ERSv3) einer repräsentativen Entität (St) der Anlage (17), und Anschließen der ersten zentralen Steuereinheit (U1) an die repräsentative Entität (St).
iv. Empfangen (ERSv5) einer zweiten Nachricht zur Registrierungsanforderung (MRU2) einer zweiten zentralen Steuereinheit (U2) für die Anlage (17), die von der zweiten zentralen Steuereinheit (U2) oder alternativ von einem Benutzerterminal (T) emittiert wurde, in Verbindung mit einer zweiten Identifikationsinformation (IID2).
v. Erhalten (ERSv6) einer zweiten Information des Anschlusses (Stl2) der zweiten zentralen Steuereinheit (U2) an eine repräsentative Entität (St) einer Gebäudeautomatisierungsanlage (17).
vi. Für den Fall, dass die zweite Anschlussinformation (Stl2) einem Anschluss an eine repräsentative Entität einer Anlage entspricht, die die erste zentrale Steuereinheit (U1) umfasst, Anschließen (ERSv7) der zweiten zentralen Einheit (U2) an eine repräsentative Entität (St) der Anlage (17), an die auch die erste zentrale Steuereinheit (U1) angeschlossen ist,
wobei die repräsentative Entität (St) der Gebäudeautomatisierungsanlage (17) einer Gruppe (DGrSt) von Vorrichtungen zugeordnet ist, die die Vorrichtungen zusammenfasst, die in mindestens einer ersten Gruppe (DGrU1) von Vorrichtungen enthalten sind, die mit der ersten zentralen Steuereinheit (U1) verknüpft sind, und mindestens einer zweiten Gruppe (DGrU2) von Vorrichtungen, die mit der zweiten zentralen Steuereinheit (U2) verknüpft sind,
wobei die erste und/oder zweite Anschlussinformation (IID1, IID2) einen Identifikator einer zentralen Steuereinheit umfasst, die bereits zu einer repräsentativen Entität (St) gehört.

2. Registrierungsverfahren nach Anspruch 1, wobei die repräsentative Entität (St) der Gebäudeautomatisierungsanlage (17) einer Gruppe (UGrSt) zugeordnet ist, die mindestens die Identifikatoren (UID1, UID2) der ersten zentralen Steuereinheit (U1) und der zweiten zentralen Steuereinheit (U2) umfasst.

3. Registrierungsverfahren nach einem der Ansprüche 1 bis 2, wobei die repräsentative Entität (St) der Gebäudeautomatisierungsanlage (17) einer Gruppe (UsrGrSt) zugeordnet ist, die mindestens einen Identifikator (UsrID1) eines Benutzers umfasst.

4. Registrierungsverfahren nach einem der Ansprüche 1 bis 3, ferner den folgenden Schritt umfassend:
- Speichern einer Information des Anschlusses mindestens einer Gebäudeautomatisierungsvorrichtung (D) an eine zentrale Steuereinheit (U).

5. Registrierungsverfahren nach einem der Ansprüche 1 bis 4, wobei die Gebäudeautomatisierungsvorrichtungen (D) eindeutig durch einen Vorrichtungsidentifikator (DURL) identifiziert sind, einen Identifikator der zentralen Steuereinheit (UID), an die die Vorrichtung angeschlossen ist, umfassend.

6. Registrierungsverfahren nach einem der Ansprüche 1 bis 5, wobei die erste und/oder zweite Anschlussinformation (IID1, IID2) einen Identifikator eines Benutzers (UsrID) und/oder einen Identifikator einer repräsentativen Entität einer Anlage (St) umfasst.

7. Registrierungsverfahren nach einem der Ansprüche 1 bis 6, ferner umfassend, für den Fall, dass eine zentrale Steuereinheit (U) bereits mit einer oder mehreren Vorrichtungen (D) einer Gruppe (DGrU1) gekoppelt ist, den folgenden Schritt:
- Aktualisieren (ERSv4) der repräsentativen Entität (St) zur Integration der Vorrichtungen (D) in die Gruppe der Vorrichtungen (DGrSt), die mit der repräsentativen Entität der Anlage (17) verknüpft ist.

8. Computerprogrammprodukt, Codeanweisungen umfassend, die eingerichtet sind, um die Schritte eines Verfahrens nach einem der Ansprüche 1 bis 7 zu implementieren, wenn das Programm von einem Prozessor einer Verwaltungseinheit (Sv) ausgeführt wird.

9. System, eine Verwaltungseinheit (Sv) umfassend, die eingerichtet ist, um das Verfahren nach einem der Ansprüche 1 bis 7 auszuführen, in verbundener Weise mit mindestens einer zentralen Steuereinheit (U) einer Gebäudeautomatisierungsanlage (17).

## Claims

1. A registration method of a central control unit (U) belonging to a home automation installation (17), the home automation installation (17) comprising a plurality of home automation devices (D) and a plurality of central control units (U1, U2), each central control unit (U1, U2) comprising at least one processing unit for containing and executing at least one computer program, each central control unit (U1, U2) further comprising at least one communication module intended to monitor and/or control at least one home automation device, each central control unit (U1, U2) further comprising at least one communication module with a management unit (Sv); the method being executed by a management unit (Sv) connected to the at least one home automation installation (17) and comprising the following steps:
i. Receiving (ERSv1) a first registration request message (MRU1) of a first central control unit (U1) for the installation (17) transmitted by a first central control unit (U1), or alternatively by a user terminal (T), in connection with a first identification information IID1.
ii. Obtaining (ERSv2) a first attachment information (Stl1) of the first central control unit (U1) to a representative entity (St) of a home automation installation (17).
iii. If the first attachment information (Stl1) corresponds to an absence of attachment of the central control unit (U1) to a previously recorded installation (17), creating (ERSv3) a representative entity (St) of the installation (17) and attaching the first central control unit (U1) to said representative entity (St).
iv. Receiving (ERSv5) a second registration request message (MRU2) of a second central control unit (U2) for the installation (17), issued by the second central control unit (U2), or alternatively by a user terminal (T), in connection with a second identification information (IID2).
v. Obtaining (ERSv6) a second attachment information (Stl2) of the second central control unit (U1) to a representative entity (St) of a home automation installation (17).
vi. In the case where the second attachment information (Stl2) corresponds to an attachment to a representative entity of an installation comprising the first central control unit (U1), attaching (ERSv7) the second central control unit (U2) to a representative entity (St) of the installation (17) to which the first central control unit (U1) is also attached,
wherein the representative entity (St) of the home automation installation (17) is associated to a group of devices (DGrSt) grouping the devices contained in at least one first device group (DGrU1) attached to the first central control unit (U1) and at least one second device group (DGrU2) attached to the second central control unit (U2),
wherein the first and/or the second attachment information (IID1, IID2) comprise an identifier of a central control unit already belonging to a representative entity (St).

2. The registration method according to claim 1, wherein the representative entity (St) of the home automation installation (17) is associated to a group (UGrSt) comprising at least the identifiers (UID1, UID2) of the first central control unit (U1) and the second central control unit (U2).

3. The registration method according to any one of claims 1 to 2, wherein the representative entity (St) of the home automation installation (17) is associated to a group (UsrGrSt) comprising at least one identifier (UsrID1) of a user.

4. The registration method according to any one of claims 1 to 3, further comprising the following step:
- storing an attachment information of at least one home automation device (D) to a central control unit U;

5. The registration method according to any one of claims 1 to 4, wherein the home automation devices (D) are uniquely identified by a device identifier (DURL) comprising an identifier of the central control unit (UID) to which said device is attached.

6. The registration method according to any one of claims 1 to 5, wherein the first and/or the second attachment information (IID1, IID2) comprise a user identifier (UsrID) and/or an identifier of a representative entity of an installation (St).

7. The registration method according to any one of claims 1 to 6, further comprising, in the case where a central control unit (U) is already paired with one or more device(s) (D) of a group (DGrU1), the following step:
- Updating (ERSv4) the representative entity (St) to integrate said devices (D) in the device group (DGrSt) attached to the representative entity of the installation (17).

8. A computer program product comprising code instructions arranged to implement the steps of a method according to any one of claims 1 to 7, when said program is executed by a processor of a management unit (Sv).

9. A system comprising a management unit (Sv) arranged to execute the method according to any of claims 1 to 7, connected to at least one central control unit (U) of a home automation installation (17).
